# NEUE EUROPÄISCHE PATENTSCHRIFT

(11) **EP 0 246 429 B2**
(45) Veröffentlichungstag und Bekanntmachung des Hinweises auf die Entscheidung über den Einspruch: **03.08.1994**
(45) Hinweis auf die Patenterteilung: 29.08.1990
(21) Anmeldenummer: 87104848.4
(22) Anmeldetag: 02.04.1987
(51) Int. Cl.: G01N 27/417

(54) **Sonde zur Messung des Sauerstoff-Partialdruckes in einer Gasatmosphäre bezogen auf eine Referenzatmosphäre**
Probe for measuring the partial oxygen pressure in a gaseous atmosphere with respect to a reference atmosphere
Sonde pour la mesure de la pression partielle de l'oxygène dans une atmosphère de gaz, par rapport à une atmosphère de référence

(30) Priorität: 17.04.1986 CH 1543/86
(43) Veröffentlichungstag der Anmeldung: 25.11.1987
(73) Patentinhaber: Beuret, Pierre, CH-2900 Porrentruy (CH); Beuret, Jacques, CH-2900 Porrentruy (CH)
(72) Erfinder: Beuret, Pierre, CH-2900 Porrentruy (CH); Beuret, Jacques, CH-2900 Porrentruy (CH)
(74) Vertreter: Eschmann, Heinz

(56) Entgegenhaltungen:
- EP-A- 0 117 230
- DE-A- 3 503 155
- FR-A- 2 374 640
- FR-A- 2 387 449
- FR-A- 2 390 727
- FR-A- 2 423 777
- US-A- 3 616 407
- US-A- 4 229 275
- US-A- 4 339 318
- US-A- 4 537 661
- Einbau- und Inbetriebnahmevorschrift für Carbon Sensor CS-85, D8/85; Process-Electronic
- CS85 - Die zuverlässige C-Pegel-Messung, Process-Electronic

## Beschreibung

Die vorliegende Erfindung betrifft eine Messonde gemäss Oberbegriff des Patentanspruches 1.

Es sind verschiedene Sonden bekannt, deren Reaktionselement aus einem Zirkoniumteilchen aufgebaut ist und deren Dichtigkeit zwischen den beiden Atmosphären entweder durch eine abnehmbare Dichtung oder durch Festlöten des Teilchens auf seinen Träger gewährleistet ist. Doch ist das Teilchen infolge Herstellung und Unterhalt kostspielig. Das Teilchen muss nach Ablauf seiner Lebensdauer ersetzt werden und ebenso sein Träger, falls die beiden miteinanderverlötetsind, oderseine Dichtung, sofern eine solche verwendet wird.

Derartige Sonden werden zur Ueberwachung von Wärmebehandlungs-Oefen eingesetzt, in welchen gesteuerte Härte- und Wärmebehandlungen durchgeführt werden. Das Reaktionselement besteht in der Regel aus gesintertem Zirkonium, das mit Yttriumoxid stabilisiert wurde. Reaktionselemente der genannten Art können auch zur Ueberwachung der Verbrennung in Heizkesseln mit Schweröl oder Gas oder in Explosionsmotoren verwendet werden, um das Verhältnis von Kohlenmonoxid zu Kohlendioxid in den Verbrennungs- bzw. Abgasen zu bestimmen.

Bei Wärmebehandlungen werden die Sonden direkt in den Behandlungsbereich eingeführt und sehr unterschiedlichen Temperaturen sowie thermischen und/odermechanischen Schocks ausgesetzt. Hierbei können die Temperaturen von der Umgebungstemperatur bis zu mittleren Temperaturen von 800 bis 1250 °C variieren. Bei solchen Temperaturen sind die keramischen Systeme am widerstandsfähigsten. Sofern man für den elektrischen Kontakt der äusseren Elektrode oder für die Dichtung Platin verwendet, ist die Lebensdauer infolge derAgressivität des Russes gegenüber Platin begrenzt. Infolgedessen wird angestrebt, die Dichtung und das Platinteil in derAussenelektrode wegzulassen.

Die wichtigsten Voraussetzungen für eine einwandfreie Funktion einer Messonde können wie folgt zusammengefasst werden:
1. Gasdichtigkeit zwischen den beiden Zonen des Reaktionselementes, damit die Messatmosphäre mit der Referenzatmosphäre nicht vermischt wird.
   Es ist möglich, dass während des Betriebes die Behandlungsumgebung durch Oeldämpfe, Salz oder durch Rückstände an den zu behandelnden Teilen verschmutzt ist, selbst wenn letztere gewaschen werden. Infolgedessen können die Reaktionselemente mit Dampf beschlagen werden, woraus eine Messabweichung resultiert. In solchen Fällen ist es erforderlich, die Verunreinigungen zu verbrennen oder Reaktionselement und Dichtung schleunigst auszuwechseln, was eine kostspielige Massnahme bedeutet.
2. Die Verwirklichung einer Gasdichtigkeit, ohne Dichtungen oder Klebestoffe zu verwenden.
3. Eine elektrische Isolation zwischen den beiden Zonen des Reaktionselementes (Mess- und Referenzgas), um eine elektrische Potentialdifferenz erreichen zu können und einen Kurzschluss durch einen Metallträger zu vermeiden.
4. Leichte Auswechselbarkeit des Reaktionselementes.

Die bisher bekannten Sonden sind weit davon entfernt, diese Voraussetzungen zu erfüllen.

Durch die Patentanmeldung EP-A 0 117 230 ist eine gattungsgemässe Sonde bekannt, bei der das Reaktionselement rotationssymmetrisch als Scheibe ausgebildet und in einem kegelstumpfförmig bzw. zlindrisch erweiterten Bereich des rohrförmigen Trägers angeordnet ist. Um die erforderliche Gasdichtigkeit zwischen den beiden Zonen des Reaktionselementes sicherzustellen, ist zwischen dem Reaktionselement und einer in dem erweiterten Bereich des rohrförmigen Trägers ausgebildeten ebenen Schulter ein Dichtring aus Platin angeordnet. Der Ausbildung des erweiterten Bereichs des rohrförmigen Trägers sowie die Notwendigkeit einen Dichtring anzuordnen führt zu einem relativ grossen Herstellungsaufwand; die Notwendigkeit einen Dichtring anzuordnen hat ferner zur Folge, dass bei einem Auswechseln eines Reaktionselementes auch der Dichtring ausgewechselt oder zumindest dahingehend überprüft werden muss, ob er hinsichtlich seiner Dichteigenschaften den Erfordernissen noch genügt.

Die französische Patentanmeldung FR-A 2 390 727 beschreibt eine Messzelle, mittels welcher der Sauerstoffgehalt in einem Gasgemisch bestimmt werden kann. Ein kegelstumpfförmiges Plättchen ist in direktem Kontakt mit einer metallischen Hülle und einer Hülse aus Tonerde. Diese Messzelle dürfte kaum in befriedigender Weise arbeiten, weil die Kontaktflächen zwischen dem Plättchen einerseits und der Metallhülle sowie der Tonerdenhülse andererseits die erforderliche Dichtigkeit nicht gewährleisten können. Tatsächlich müssen die unterschiedlichen Ausdehnungskoeffizienten der obengenannten Teile zwingend zu undichten Stellen führen, welche die besagte Zelle unbrauchbar machen. Mit einem Metallträger verursacht man überdies einen Kurzschluss.

Die amerikanische Patentschrift 4.339.318 betrifft ebenfalls eine Vorrichtung zur Analyse eines sauerstoffhaltigen Gases. Das zylindrisch geformte Metallplättchen ist in einer Schulter angeordnet, welche den Uebergang zwischen zwei zylindrischen Bohrungen von unterschiedlichem Durchmesser bildet. Die geforderte Dichtigkeit kann offensichtlich nur unter Verwendung eines Klebstoffes gewährleistet werden; darüber hinaus ist das Plättchen nicht auswechselbar.

Die amerikanische Patentschrift 3.616.407 zeigt ein Gerät zur Bestimmung des Sauerstoffgehaltes bei Metallen in flüssigem Zustand. Man verwendet einen sphärischen Elektrolyten, der in einem sphärischen Sitz im Vorderteil eines Rohres angeordnet ist. Der sphärische Elektrolyt, der offensichtlich im verformbaren Zustand vor dem Brennen des KeramikMaterials montiert werden muss, ist nicht auswechselbar und sein Sitz weist gasdurchlässige Stellen auf, welche infolge der unterschiedlichen Wärmeausdehnungskoeffizienten von Rohr und Elektrolyt-Zelle hervorgerufen werden. Darüber hinaus eignet sich die beschriebene Vorrichtung nicht zur Messung des Sauerstoffpartialdruckes in einer Gasatmosphäre.

Eine durch Vorbenutzung bekanntgewordene, gattungsgemäße Sonde dieser Art, deren Aufbau sich aus der nach veröffentlichten DE-A-35 03155 ergibt, zeigt ein Reaktionselement, das in Form einer mit exzentrischer Bohrung versehenen Hülse mit scheibenförmigem Kopf ausgebildet ist, in deren Ringschulter der vordere Abschnitt eines Verlängerungsrohres eingreift. Das Reaktionselement und der vordere Abschnitt des Verlängerungsrohres werden durch eine elastische kraft abdichtend gegeneinander gepreßt.

Es ist Aufgabe der Erfindung, die Auswechselbarkeit der Reaktionselemente zu erleichtern, zugleich eine gute Dichtigkeit zu gewährleisten, ohne dass eine Dichtung oder ein Klebestoff verwendet werden muss.

Die Lösung dieser Aufgabe erfolgt gemäss kennzeichnendem Teil des unabhängigen Patentanspruches.

Die Zeichnung zeigt ein Ausführungsbeispiel der erfindungsgemässen Sonde sowie verschiedene Varianten. Es zeigen:
Fig. 1 eine Ausführungsform der Sonde im Längsschnitt
Fig. 2 einen Schnitt 11-11 gemäss Fig. 1
Fig. 3,4 je eine Ausführungsvariante eines Messkopfes.

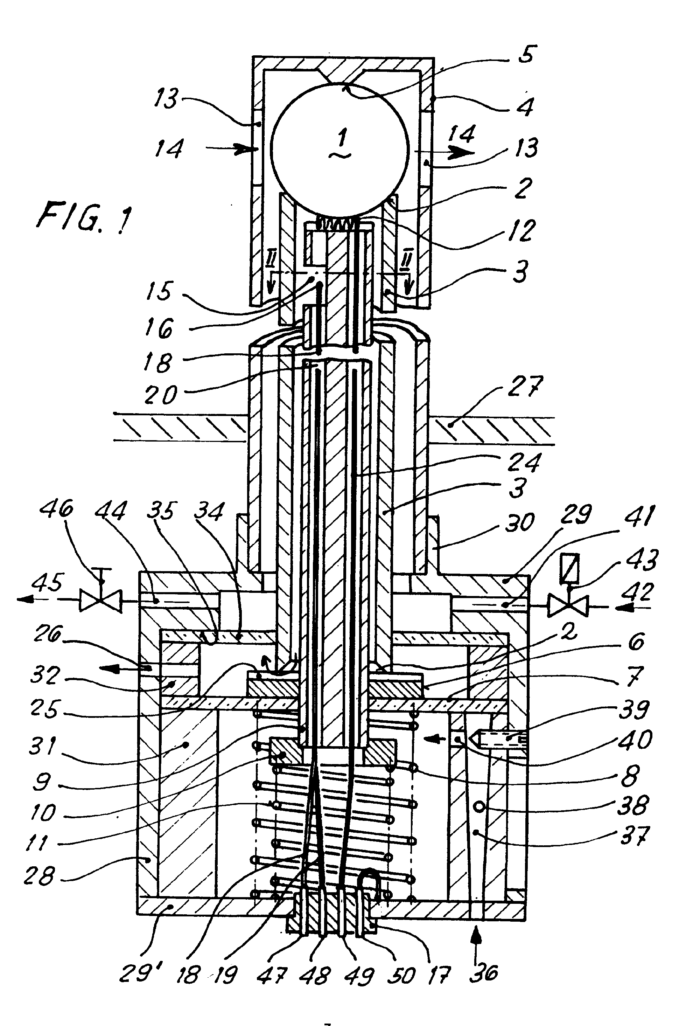

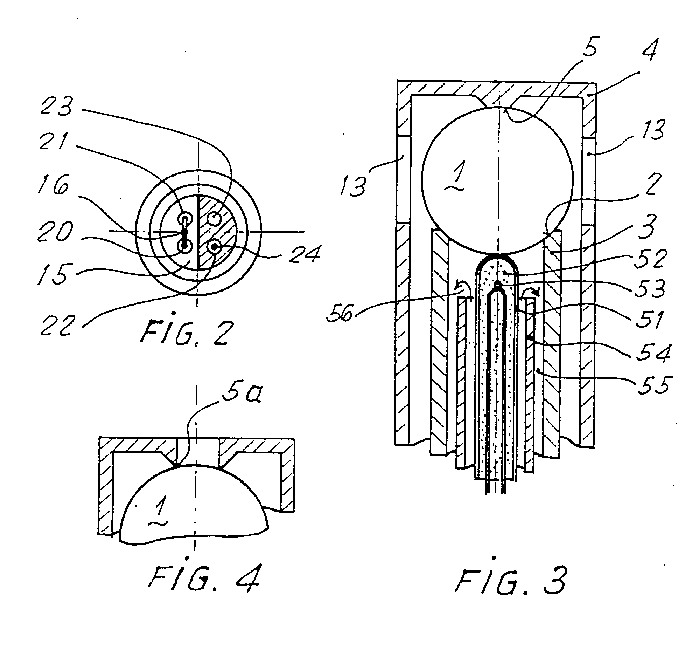

Die Figuren 1 und 2 zeigen eine Sonde für die kontinuierliche Messung des Sauerstoffpartialdruckes einer Gasatmosphäre in Bezug auf Luft als Referenzgas.

Sie umfasst ein Reaktionselement in Form eines Kügelchens aus einem festen Elektrolyten, welcher aus gesintertem und stabilisiertem Zirkoniumoxid besteht. Dieses Kügelchen ruht auf einem dichten Sitz 2 eines keramischen Trägers 3. Eine Hülse 4 aus hitzebeständigem Stahl dient als äussere Elektrode und weist einen Gegensitz 5 auf, welcher den Abschluss bildet, während das andere Ende des Trägers 3 an eine Scheibe 6 anschliesst, die sich über eine luftdichte Membran 7 auf eine Feder 8 abstützt. Diese Anordnung ermöglicht die Fixierung des Kügelchens 1 mit dem erforderlichen Druck, welcher gegen selbiges einerseits und den Sitz 2 sowie gegen den Gegensitz 5 ausgeübt wird. Ein Stift 9, der im Inneren des Trägers 3 angeordnet ist und eine innere Elektrode bildet, trägt einen Federteller 10 für eine Feder 11, wobei der Stift 9 einen Kontaktschuh 12 gegen das Kügelchen 1 presst. Die Gesamtheit von Kügelchen 1, Sitz 2, Gegensitz 5 und Kontaktschuh 12 bilden den Messkopf.

Das Ende der Hülse 4 weist Oeffnungen 13 auf, welche dem Durchtritt des Messgases 14 dienen. Man sieht in Figur 1, dass die Kontaktfläche zwischen dem Kügelchen 1 und dem gasdichten Sitz 2 des Trägers 3 keinerlei Dichtung aufweist. Wie man in Figur 2 besonders deutlich sehen kann, besitzt der innere Sift 9 eine Kammer 15, in welcher ein Thermoelement 16 angeordnet ist, das über zwei Drähte 18,19 mit zwei Klemmen eines Anschlusses 17 verbunden ist, wobei die Drähte 18,19 den Stift 9 in zwei entsprechenden Kanälen 20,21 in Längsrichtung durchqueren. Der innere Stift 9 beitzt ausserdem zwei weitere Längskanäle 22 und 23. Im Kanal 22 ist ein Draht 24, der den Kontaktschuh 12 mit dem Anschluss 17 verbindet. Der Kanal 23 erlaubt den Zutritt von Referenzluft, welche an der Unterfläche des Kügelchens 1 entlangströmt und zwischen dem Stift 9 unten und dem Träger 3 durch eine Oeffnung 25 der Scheibe 6 und die Oeffnung 26 eines weiter unten beschriebenen Gehäuses entweicht. Das Ende der Hülse 4, das den Kopf der Sonde enthält, wird beispielsweise im Messbereich eines Ofens eingesetzt, bei dem man die Atmosphäre messen will, wobei die Hülse in diesem Messbereich eine Wandung 27 durchdringt.

Die Sonde umfasst ausserdem ein gasdichtes Gehäuse 28, das einerseits aus einer Hülle 29 mit einem Hals 30, in welcher die Hülse 4 festgeschraubt ist, und andererseits aus einem abnehmbaren Deckel 29' aufgebaut ist. Die schon erwähnte gasdichte Membran 7 ist zwischen zwei Ringen 31 und 32 festgeklemmt, während eine zweite gasdichte Membran 34 zwischen den Ring 32 und eine Schulter 35 festgeklemmt ist. Der Deckel 29' besitzt neben dem schon erwähnten Anschluss 17 einen Referenzlufteintritt 36, welcher in einem im Ring 31 angeordneten Durchflussmesser 37 mündet, der seinerseits einen Schwimmer 38 sowie eine Messchraube 39 umfasst.

Die Referenzluft dringt in den unterhalb der Membran 7 befindlichen Raum durch eine Oeffnung 40 des Durchflussmessers, um durch den genannten Zugang in den durch die beiden Membranen 7 und 34 sowie durch die im Ring 32 vorgesehene Oeffnung 26 und die Hülle 29 begrenzten Raum zu gelangen. Letztere besitzt eine Oeffnung 41, welche mit einem zusätzlichen Lufteintritt verbunden ist, welcher schematisch mit der Hinweisziffer 42 bezeichnet ist und durch ein Magnetventil 43 gesteuert wird, um sporadisch allfällige Verunreinigungen im Messkopf zu reinigen und zu verbrennen. Die Hülle 29 weist ebenfalls eine Austrittsöffnung 44 auf, welche in eine Abströmleitung 45 mit einem Steuerventil 146 mündet, so dass hieraus dem zu untersuchenden Gas Proben fürAnalysezwecke entnommen werden können.

Der Anschluss 17 wird direkt an ein nicht dargestelltes elektronisches Ueberwachungs- oder Steuergerät angeschlossen. Er weist vier Kontaktklemmen auf 47,48,49,50, von denen die beiden ersteren an die Drähte 18,19 des Thermoelementes, die Kontaktklemme 49 an den eine negative Polung aufweisenden Draht 24 der inneren Elektrode 9 und die positiv gepolte Kontaktklemme 50 am Gehäuse 28 angeschlossen ist.

Die Sonde funktioniert wie folgt:
Die vom Thermoelement 16 an den Kontaktklemmen 47,48 erzeugte Spannung entspricht in Millivolt der Temperatur des Messgases 14. Die zwischen den Kontaktklemmen 49 und 50, d.h. zwischen der inneren und äusseren Elektrode in direktem Kontakt mit dem Reaktionselement erzeugte Spannung, entspricht gemäss der Nernst'schen Gleichung in Millivolt der Sauerstoffkonzentration bezogen auf das Kohlenstoffpotential. Diese Spannung dient der Steuerung der für die Wärmebehandlungen erforderlichen Gasströme. Versuche haben gezeigt, dass die Messgenauigkeit mit Sonden der oben beschriebenen Art diejenige von herkömmlichen Sonden übertrifft.

Für Unterhaltsarbeiten oderfürdas Auswechseln des Reaktionselementes 1 genügt es - dank dem in der Schulter 30 vorgesehenen, in der Figur jedoch nicht dargestellten Gewinde - die Hülse 4 vom Gehäuse 28 abzuschrauben und das Reaktionselement 1 vom Träger 3 zu entfernen, um den gesamten Messkopf freizugeben. Zugang und Unterhalt sind daher vereinfacht.

Die Ausführungsvariante gemäss Figur 3, in der entsprechende Teile mit denselben Hinweisziffern wie oben bezeichent sind, umfasst ein metallisches Rohr 51 als innere Elektrode, das mit Magnesiumoxid 52 gefüllt ist und mit seinem oberen, abgerundeten Ende gegen das Kügelchen 1 elastisch abgestützt wird. Das Rohr 51 enthält ein Themoelement 53, das über zwei Drähte mit den Kontaktklemmen 47,48 eines in dieser Figur 3 nicht dargestellten Anschlusses verbunden ist, der aber mit dem in Figur 1 mit der Hinweisziffer 17 versehenen identisch ist. Das Thermoelement hat ebenfalls die gleiche Funktion.

Das Metallrohr 51 ist mit der Kontaktklemme 49 verbunden. Das Rohr 51 ist konzentrisch in einem Rohr 54 angeordnet, so dass zwischen den beiden ein Durchtritt 55 für die gegen das Kügelchen gerichtete Referenzluft 56 vorhanden ist.

Figur 4 zeigt eine Ausführungsvariante des Gegensitzes 5 der Hülse 4, welche den elektrischen Kontakt zwischen letzterer und dem Reaktionselement 1 verbessert.

Gemäss einer weiteren Variante sind die beiden Enden des röhrenförmigen Trägers 3 mit sphärischen Sitzen 2 (Fig. 1) versehen, so dass der rohrförmige Träger, im Beschädigungs- oder Abnützungsfalle umgewendet werden kann und auf diese Weise eine beachtliche Lebensdauer aufweist.

## Patentansprüche

1. Sonde zur Messung des Partialdruckes von Sauerstoff in einer Gasatmosphäre (14) bezogen auf eine Referenzatmosphäre, umfassend ein Gehäuse (28), ein Reaktionselement (1) aus einem festen Elektrolyten, das in einem Meßkopf an einem Ende der Sonde befestigt ist, einen rohrförmigen Träger (3) aus Keramikmaterial, der dieses Reaktionselement (1) trägt und die Gasatmosphäre (14) von der Referenzatmosphäre trennt, eine Meßelektrode (4), welche mit dem Reaktionselement (1) im Bereich der zu messenden Gasatmosphäre in Verbindung steht und eine innere Elektrode (9), welche mit dem Reaktionselement (1) im Bereich der Referenzatmosphäre in Verbindung ist, wobei die Außenfläche des Reaktionselementes (1) mindestens teilweise dem Mantel eines Rotationskörpers entspricht und das Reaktionselement 1 zwischen einem inneren Anschlag (5, 5a) der Meßelektrode (4), welche in einer aus hitzefestem Stahl bestehenden rohrförmigen, mit dem Gehäuse (28) lösbar verbundenen und Meßgasdurchtrittsöffnungen (13) aufweisenden Hülse (4) gebildet ist, und dem rohrförmigen Träger (3) angeordnet ist; dadurch gekennzeichnet,
dass das Reaktionselement (1) eine Kugel ist und derart in der rohrförmigen Hulse (4) angeordnet ist, daß eine großflächige Beaufschlagung mit der Gasatmosphäre ermöglicht wird und daß der gegenüber dem Reaktionselement (1) dichtend ausgebildete Sitz (2) des rohrförmigen Trägers (3) von einer konstanten elastischen Kraft (8) direkt gegen die Kugel (1) gepresst wird.

2. Sonde nach Anspruch 1, dadurch gekennzeichnet dass das Reaktionselement (1) über die besagte Hülse (4) elastisch gegen einen Gegensitz (5) der Hülse (4) gepresst ist, dass die innere Elektrode einen Stift (9) im Innern des röhrförmigen Trägers (3) umfasst, dass ein Kontaktschuh (12) durch den Stift (9) elastisch gegen das Reaktionselement (1) gepresst wird, und dass der Gegensitz (5) und der Kontaktschuh (12) auf derselben Achse einander gegenüber liegend angeordnet sind.

3. Sonde nach Anspruch 2, dadurch gekennzeichnet, dass der Gegensitz (5a) in axialer Richtung durchbohrt ist, so dass mit dem Reaktionselement (1) eine ringförmige Kontaktzone gebildet wird.

4. Sonde nach Anspruch 3, dadurch gekennzeichnet, dass ein zwischen der Hülse (4) und dem rohrförmigen Träger (3) bestehender Raum auf der Gegenseite des Reaktionselementes (1) durch eine Membran (34) verschlossen ist, wobei die Hülse (4) in Höhe des Reaktionselementes (1) Oeffnungen aufweist, durch welche Gas zu Messzwecken in die Zone gelangen kann, in welcherdas Reaktionselement (1) den Gegensitz (5) berührt.

5. Sonde nach Anspruch 4, dadurch gekennzeichnet, dass sie ein Thermoelement (16) zur Messung der Temperatur des Reaktionselementes (1) aufweist.

6. Sonde nach Anspruch 5, dadurch gekennzeichnet, dass die innere Elektrode ein metallisches, mit Magnesiumoxid (52) gefülltes Rohr (51) enthält, welches an seinem verschlossenen Ende ein Thermoelement (53) enthält, das elastisch gegen das Reaktionselement (1) gedrückt wird.

7. Sonde nach Anspruch 5, dadurch gekennzeichnet, dass der in der inneren Elektrode befindliche Stift (9) in Längsrichtung von mehreren länglichen Kanälen durchsetzt ist, durch welche einerseits die Verbindungsdrähte zum Thermoelement und dem Kontaktschuh und andererseits auch Referenzluft gelangen kann, welche im Bereich des genannten Kontaktschuhs (12) am Reaktioselement (1) vorbeiströmt, wobei ein Durchflussmesser (37) die Zufuhr einer konstanten Luftmenge gewährleistet und die Luft durch einen Kanal zwischen dem Träger (3) und dem Stift (9) abgeführt wird.

8. Sonde nach einem der Ansprüche 1 bis 7, dadurch gekennzeichnet dass die beiden Enden des rohrförmigen Trägers (3) mit sphärischen Sitzen (2) versehen sind so dass der rohrförmige Träger (3) im Beschädigungs- oder Abnützungsfalle gewendet werden kann.

## Claims

1. Probe for measuring the partial oxygen pressure in a gaseous atmosphere (14) with respect to a reference atmosphere, comprising a housing (28), a reaction element (1) consisting of a solid electrolyte affixed in a measuring head at one end of the probe, a tubular support (3) of ceramic material bearing the said element (1) and separating the gaseous atmosphere (14) from the reference atmosphere, a measuring electrode (4) connected to the reaction member (1) in the zone of the gaseous atmosphere to be measured, and an internal electrode (9) connected to the reaction member (1) in the zone of the reference atmosphere, the outer surface of the reaction member (1) corresponding at least partly to the casing of a rotation body and the reaction member(1) being positioned between an inner stop (5, 5a) belonging to the measuring electrode (4) which is formed in a tubular sleeve (4) consisting of heatproof steel with orifices (13) for the gas to be measured and detachably connectable to the housing (28), and the tubular support (3), characterised by the fact that the reaction member (1) is a sphere and is positioned in the tubular sleeve (4) in such a way as to enable the gaseous atmosphere to act on a large area thereof and that its seating (2), exerting a sealing effect in relation to the reaction member (1) of the tubular support (3) is pressed by a constant elastic force directly against the sphere.

2. Probe in accordance with Claim 1, characterised by the fact that the reaction member (1) is elastically pressed, via the said sleeve (4), against a stop (5) of the sleeve (4), that the inner electrode comprises a rod (9) inside the tubular support (3), that a contact shoe (12) is elastically pressed by the rod (9) against the reaction member (1), and that the stop (5) and the contact shoe (12) are mounted opposite to each other on one and the same axis.

3. Probe in accordance with Claim 2, characterised by the fact that the stop (5a) is bored in the axial direction, thus forming an annular contact zone with the reaction member (1).

4. Probe in accordance with Claim 3, characterised by the fact that a space provided on the opposite side of the reaction member (1) and present between the sleeve (4) and the tubular support (3) is closed by a diaphragm (34), the sleeve (4) being provided, on a level with the reaction element (1), with openings through which gas can enter, for measuring purposes, the zone in which the reaction member (1) contacts the stop (5).

5. Probe in accordance with Claim 4, characterised by the fact that it has a thermocouple (16) for measuring the temperature of the reaction member (1).

6. Probe in accordance with Claim 5, characterised by the fact that the inner electrode contains a metal tube (51) which is filled with magnesium oxide (52) and which at its closed end contains a thermocouple (53) which is pressed elastically against the reaction member (1).

7. Probe in accordance with Claim 5, characterised by the fact that the rod (9) present in the inner electrode is provided, in the longitudinal direction, with a number of longitudinal ducts giving passage on the one hand to the connecting wires to the thermocouple and contact shoe and on the other hand to reference air likewise, which in the zone of the said contact shoe (12) flows past the reaction member (1), a flow meter (37) ensuring the supply of a constant quantity of air and the air being discharged through a duct between the support (3) and the rod (9).

8. Probe in accordance with one of the Claims 1 - 7, characterised by the fact that the two ends of the tubular support (3) are provided with spherical seatings (2), so that the tubular support (3) can be used in the event of damage or wear.

## Revendications

1. Sonde pour la mesure de la pression partielle de l'oxygène dans une atmosphère gazeuse (14) par rapport à une atmosphère de référence, comportant un boîtier (28), un élément de réaction (1) constitué d'un électrolyte solide qui est fixé dans une tête de mesure située à une extrémité de la sonde, un support tubulaire (3) en matière céramique qui porte cet élément de réaction (1) et qui sépare l'atmosphère gazeuse (14) de l'atmosphère de référence, une électrode de mesure (4) qui est connectée à l'élément de réaction (1) dans la zone de l'atmosphère gazeuse à mesurer et une électrode intérieure (9) qui est connectée à l'élément de réaction (1) dans la zone de l'atmosphère de référence, la surface extérieure de l'élément de réaction (1) correspondant au moins partiellement à l'enveloppe d'un solide de révolution, l'élément de réaction (1) étant disposé entre une butée intérieure (5, 5a) de l'électrode de mesure (4), qui est faite d'un étui tubulaire en acier résistant à la chaleur relié de manière amovible au boîtier (28) et pourvu d'ouvertures (13) de passage pour le gaz de mesure, et le support tubulaire (3), caractérisée en ce que l'élément de réaction (1) est une bille et est disposé dans l'étui tubulaire (4) d'une manière telle qu'un contact étendu avec l'atmosphère gazeuse soit rendu possible, et que le siège (2) du support tubulaire (3) conformé de manière étanche par rapport à l'élément de réaction (1) est pressé par une force élastique constante (8) directement contre la bille (1).

2. Sonde suivant la revendication 1, caractérisée en ce que l'élément de réaction (1) est pressé, par l'intermédiaire dudit étui (4), élastiquement contre un siège de contrepartie (5) de l'étui (4), que l'électrode intérieure comporte une tige (9) à l'intérieur du support tubulaire (3), qu'un soulier de contact (12) est pressé élastiquement contre l'élément de réaction (1) par la tige (9) et que le siège de contrepartie (5) et le soulier de contact (12) sont disposés l'un en face de l'autre sur le même axe.

3. Sonde suivant la revendication 2, caractérisée en ce que le siège de contrepartie (5a) est percé dans le sens axial de manière à former une zone de contact annulaire avec l'élément de réaction (1).

4. Sonde suivant la revendication 3, caractérisée en ce qu'un espace existant entre l'étui (4) et le support tubulaire (3) est obturé, du côté opposé à l'élément de réaction (1), par une membrane (34), l'étui (4) présentant, à la hauteur de l'élément de réaction (1), des ouvertures par lesquelles du gaz peut parvenir, à des fins de mesure, dans la zone dans laquelle l'élément de réaction (1) est en contact avec le siège de contrepartie (5).

5. Sonde suivant la revendication 4, caractérisée en ce qu'elle comporte un thermocouple (16) pour la mesure de la température de l'élément de réaction (1).

6. Sonde suivant la revendication 5, caractérisée en ce que l'électrode intérieure contient un tube métallique (51) rempli d'oxyde de magnésium (52), dont l'extrémité fermée comprend un thermocouple (53) qui est pressé élastiquement contre l'élément de réaction (1).

7. Sonde suivant la revendication 5, caractérisée en ce que la tige (9) présente dans l'électrode intérieure est traversée dans le sens longitudinal par plusieurs canaux longitudinaux par lesquels, d'une part, lesfi ls de connexion allant au thermocouple et au soulier de contact peuvent passer et, d'autre part, l'air de référence, qui balaye l'élément de réaction (1) dans la zone dudit soulier de contact (12), peut arriver, un débitmètre (37) garantissant l'admission d'une quantité d'air constante et l'air étant évacué par un canal entre le support (3) et la tige (9).

8. Sonde suivant l'une quelconque des revendications 1 à 7, caractérisée en ce que les deux extrémités du support tubulaire (3) sont pourvues de sièges sphériques (2), de sorte que le support tubulaire (3) peut être retourné bout pour bout en cas de détérioration ou d'usure.
